# EUROPEAN PATENT APPLICATION

(11) **EP 1 637 900 A1**
(43) Date of publication of application: **22.03.2006**
(21) Application number: 05020083.1
(22) Date of filing: 15.09.2005
(51) Int. Cl.: G01S 1/00

(54) **Positioning system, information provision device, control program for information provision device, terminal device, and control program for terminal device**

(30) Priority: 17.09.2004 JP 2004271964
(71) Applicant: SEIKO EPSON CORPORATION, Shinjuku-ku, Tokyo 163-0811 (JP)
(72) Inventor: Matsushita, Hiroshi Seiko Epson Corporation, Suwa-shi Nagano-ken 392-8502 (JP)
(74) Representative: HOFFMANN EITLE

(57) **Abstract**

A positioning system including: a terminal device that performs positioning based on position-related signals from SPS; and an information provision device that provides satellite predicted position information indicating predicted positions of the SPS to the terminal device, wherein the information provision device has: a satellite orbit information obtaining section for obtaining satellite orbit information indicating satellite orbits of the SPS; a satellite initial velocity information generating section for generating satellite initial velocity information indicating velocities of the SPS at a reference time as reference of the satellite predicted position information based on the satellite orbit information; a satellite initial position information generating section for generating satellite initial position information indicating positions of the SPS at the reference time based on the satellite orbit information; a physical quantity information affecting acceleration storing section for storing physical quantity information affecting acceleration indicating physical quantities affecting acceleration of the SPS; a satellite acceleration information generating section for generating satellite acceleration information indicating the acceleration of the SPS based on the satellite initial velocity information, the satellite initial position information, and the physical quantity information affecting acceleration; and a satellite predicted position information generating section for generating the satellite predicted position information based on the satellite initial velocity information, the satellite initial position information, and the satellite acceleration information, and the terminal device has: a satellite predicted position information obtaining section for obtaining the satellite predicted position information from the information provision device; a positioning section for performing positioning based on the position-related signals using the satellite predicted position information; a valid period lapse determining section for determining whether a valid period of the satellite predicted position information has elapsed or not; and a new satellite predicted position information obtaining section for obtaining a new piece of the satellite predicted position information based on a determination result of the valid period lapse determining section.

## Description

### BACKGROUND OF THE INVENTION

### 1. Technical Field

The present invention relates to a positioning system, an information provision device, a control program for information provision device, a terminal device, and a control program for terminal device based on position related-signals from SPS.

### 2. Related Art

Conventionally, positioning systems for positioning the current position of a SPS receiver utilizing SPS (Satellite Positioning System), for example, as a satellite navigation system using SPSSPS have been put into practical use. Such positioning systems include a system in which the SPS receiver obtains assist data containing orbit information superimposed on satellite signals from the respective SPS satellites (hereinafter, referred to as "Ephemeris") from an external assist server, and uses the assist data for positioning based on the satellite signals from the respective SPS satellites (hereinafter, referred to as "assist-type" (e.g., Japanese Patent Application No. Hei-10-31061).

In such an assist-type positioning system, there is an advantage that the time required for obtaining Ephemeris is shorter compared to the case where the SPS receiver itself obtains Ephemeris from the respective SPS satellites.

However, in the above described assist-type positioning system, even if the SPS receiver has stored Ephemeris obtained from the assist server, because the valid period of Ephemeris is about four hours, when the positioning is performed after four hours from obtainment of Ephemeris, communication with the assist server is required. Accordingly, there is a problem that sometimes the communication time and communication cost therefor are required.

Further, when the communication with the assist server is impossible at the time of positioning after lapse of the valid period of Ephemeris, because the Ephemeris can not be obtained, there is a problem that sometimes the predicted positions of the respective SPS satellites can not be calculated rapidly and positioning takes long time.

### SUMMARY

Therefore, an advantage of the invention is to provide a positioning system, an information provision device, a control program for information provision device, a terminal device, and a control program for terminal device capable of providing satellite predicted position information that is valid for a longer period than orbit information superimposed on satellite signals.

According to a first aspect of the invention, a positioning system includes: a terminal device that performs positioning based on position-related information from SPS; and an information provision device that provides satellite predicted position information indicating predicted positions of the SPS to the terminal device, and the information provision device has: a satellite orbit information obtaining section for obtaining satellite orbit information indicating satellite orbits of the SPS; a satellite initial velocity information generating section for generating satellite initial velocity information indicating velocities of the SPS at a reference time as reference of the satellite predicted position information based on the satellite orbit information; a satellite initial position information generating section for generating satellite initial position information indicating positions of the SPS at the reference time based on the satellite orbit information; a physical quantity information affecting acceleration storing section for storing physical quantity information affecting acceleration indicating physical quantities affecting acceleration of the SPS; a satellite acceleration information generating section for generating satellite acceleration information indicating the acceleration of the SPS based on the satellite initial velocity information, the satellite initial position information, and the physical quantity information affecting acceleration; and a satellite predicted position information generating section for generating the satellite predicted position information based on the satellite initial velocity information, the satellite initial position information, and the satellite acceleration information, and the terminal device has: a satellite predicted position information obtaining section for obtaining the satellite predicted position information from the information provision device; a positioning section for performing positioning based on the position-related signals using the satellite predicted position information; a valid period lapse determining section for determining whether a valid period of the satellite predicted position information has elapsed or not; and a new satellite predicted position information obtaining section for obtaining a new piece of the satellite predicted position information based on a determination result of the valid period lapse determining section.

According to the configuration, the information provision device can generate the satellite initial velocity information with the satellite initial velocity information generating section, and generate the satellite initial position information with the satellite initial position information generating section. Further, the information provision device can generate the satellite acceleration information based on the satellite initial velocity information, the satellite initial position information, and the physical quantity information affecting acceleration with the satellite acceleration information generating section. Furthermore, the information provision device can generate the satellite predicted position information with the satellite predicted position information generating section.

The physical quantity information affecting acceleration is information indicating the gravitational acceleration of the SPS to the earth and the gravitational acceleration to the moon, for example, and semipermanently fixed physical quantities.

Accordingly, once the Ephemeris, for example, as the satellite orbit information, is obtained and the satellite initial velocity information and the satellite initial position information are generated, the satellite acceleration information valid for a longer period than the Ephemeris can be generated based on the physical quantity information affecting acceleration.

Further, the satellite predicted position information generated based on the satellite acceleration information that is valid for a longer period than the Ephemeris also becomes information that is valid in a longer period than the Ephemeris.

Thereby, the information provision device can provide satellite predicted position information that is valid for a longer period than the orbit information superimposed on satellite signals.

On the other hand, the terminal device can obtain the satellite predicted position information from the information provision device with the satellite predicted position information obtaining section, and perform positioning based on the position-related signals using the satellite predicted position information with the positioning section. Further, the terminal device can determine whether the valid period of the satellite predicted position information has elapsed or not with the valid period lapse determining section, and obtain a new piece of the satellite predicted position information with the new satellite predicted position information obtaining section.

Accordingly, once the terminal device obtains the satellite predicted position information, there is no need to obtain the satellite predicted position information from the information provision device until the valid period elapses. Further, as described above, since the satellite predicted position information is information that is valid over a long period, the terminal device can use the satellite predicted position information for a long time. Further, the number of communication necessary for the terminal device to obtain the satellite predicted position information from the information provision device can be reduced.

According to a second aspect of the invention, an information provision device that provides satellite predicted position information indicating predicted positions of SPS to a terminal device for performing positioning based on position-related signals from the SPS includes: a satellite orbit information obtaining section for obtaining satellite orbit information indicating satellite orbits of the SPS; a satellite initial velocity information generating section for generating satellite initial velocity information indicating velocities of the SPS at a reference time as reference of the satellite predicted position information based on the satellite orbit information; a satellite initial position information generating section for generating satellite initial position information indicating positions of the SPS at the reference time based on the satellite orbit information; a physical quantity information affecting acceleration storing section for storing physical quantity information affecting acceleration indicating physical quantities affecting acceleration of the SPS; a satellite acceleration information generating section for generating satellite acceleration information indicating the acceleration of the SPS based on the satellite initial velocity information, the satellite initial position information, and the physical quantity information affecting acceleration; and a satellite predicted position information generating section for generating the satellite predicted position information based on the satellite initial velocity information, the satellite initial position information, and the satellite acceleration information.

According to the configuration, as well as the configuration of the first aspect, the satellite predicted position information that is valid for a longer period than the orbit information superimposed on the satellite signals can be provided.

According to a third aspect of the invention, in the second aspect, the satellite predicted position information generating section is arranged so as to generate plural pieces of the satellite predicted position information different in reference time.

As described above, the satellite predicted position information is valid for a longer period than the Ephemeris, however, sometimes the precision of the satellite predicted position information generated at one of the reference time becomes lower as the time deviates from the reference times.

On this point, according to the configuration, since the satellite predicted position information generating section of the information provision device is arranged so as to generate plural pieces of the satellite predicted position information different in reference time, it can provide the plural pieces of the satellite predicted position information for the terminal device to selectively use the satellite predicted position information with high precision.

According to a fourth aspect of the invention, in any one of the second and third aspects the device further includes: a second satellite initial velocity information generating section for generating second satellite initial velocity information indicating velocities of the SPS at a second reference time as the reference time immediately after the reference time of first satellite predicted position information based on the first satellite predicted position information as the first generated satellite predicted position information; a second satellite initial position information generating section for generating second satellite initial position information indicating positions of the SPS at the second reference time based on the first satellite predicted position information; a second satellite acceleration information generating section for generating second satellite acceleration information indicating acceleration of the SPS based on the second satellite initial velocity information, the second satellite initial position information, and the physical quantity information affecting acceleration; and a second satellite predicted position information generating section for generating second satellite predicted position information as the satellite predicted position information with reference to the second reference time based on the second satellite initial velocity information, the second satellite initial position information, and the second satellite acceleration information.

According to the configuration, the information provision device can generate the second satellite initial velocity information based on the first satellite predicted position information with the second satellite initial velocity information generating section. Further, the information provision device generates the second satellite initial position information based on the first satellite predicted position information with the second satellite initial position information generating section. Moreover, the information provision device generates the second satellite acceleration information with the second satellite acceleration information generating section. Furthermore, the information provision device can generate the second satellite predicted position information with the second satellite predicted position information generating section.

Accordingly, after the information provision device generates the first satellite predicted position information based on the satellite orbit information, it can generate the second satellite predicted position information based on the first satellite predicted position information that has been generated by the information provision device itself.

According to a fifth aspect of the invention, in any one of the second to fourth aspects, the satellite predicted position information indicates a multiple order polynomial with time as a variable.

According to the configuration, since the satellite predicted position information indicates a multiple order polynomial with time as a variable, the terminal device utilizing the satellite predicted position information can obtain information indicating the predicted positions of the SPS only by inputting time to the multiple order polynomial.

Thereby, the information provision device can provide the satellite predicted position information that enables the obtainment of the information indicating the predicted positions of the SPS only by inputting the time to the terminal device.

According to a sixth aspect of the invention, in the fifth aspect, the multiple order polynomial includes a time correction term.

According to the configuration, since the multiple order polynomial includes a time correction term, the terminal device utilizing the satellite predicted position information can obtain information indicating the predicted positions of the SPS with high precision even if the input time deviates from the reference time of the satellite predicted position information.

Thereby, the information provision device can provide the satellite predicted position information that enables the obtainment of the information indicating the predicted positions of the SPS with high precision even if the input time deviates from the reference time of the satellite predicted position information to the terminal device.

According to a seventh aspect of the invention, in the fifth or sixth aspect the multiple order polynomial is one of a seventh order polynomial, an eighth order polynomial, and a ninth order polynomial.

In the case where the multiple order polynomial is a first to sixth order polynomial, it has been experimentally clear that the predicted position of the position information satellite calculated by the multiple order polynomial has a large margin of error.

Contrary, in the case of a tenth or higher order polynomial, the calculation amount is large and the processing load on the information provision device becomes excessive. Further, it has been experimentally clear that the margin of error of the predicted position of the position information satellite becomes larger by the accumulation of errors in calculation processing.

On this point, according to the configuration, since the multiple order polynomial is one of a seventh order polynomial, an eighth order polynomial, and a ninth order polynomial, the predicted positions of the SPS can be calculated precisely without making the processing load on the information provision device excessive.

According to an eighth aspect of the invention, in any one of the second to seventh aspects the physical quantity information affecting acceleration includes gravitational acceleration information of the SPS to the earth, gravitational acceleration information of the SPS to the moon, and gravitational acceleration information of the SPS to the sun.

Among various physical quantities, the gravitational acceleration information of the SPS to the earth, the gravitational acceleration information of the SPS to the moon, and the gravitational acceleration information of the SPS to the sun especially have great influence on the acceleration of the SPS.

On this point, according to the configuration of the eighth aspect, since the physical quantity information affecting acceleration includes gravitational acceleration information of the SPS to the earth, gravitational acceleration information of the SPS to the moon, and gravitational acceleration information of the SPS to the sun, the satellite acceleration information is generated using physical quantities especially having great influence on the acceleration of the position information satellite, and thereby, the satellite acceleration information with high reliability can be generated.

Further, the satellite predicted position information generated based on the satellite acceleration information with high reliability can be made into information with high reliability.

According to a ninth aspect of the invention, in any one of the second to eight aspects the satellite predicted position information includes valid period information indicating a valid period of the satellite predicted position information.

According to the configuration, since the satellite predicted position information includes valid period information indicating a valid period of the satellite predicted position information, for example, the terminal device that has obtained the plural pieces of the satellite predicted position information can determine whether each satellite predicted position information is within the valid period or not, and select and use the satellite predicted position information within the valid period.

Accordingly, the information provision device can provide the satellite predicted position information that enables the terminal device to determine whether the information is within the valid period or not and select and use the satellite predicted position information within the valid period.

According to a tenth aspect of the invention, in the ninth aspect a total of the valid periods of the plural pieces of the satellite predicted position information is longer than a valid period of the satellite orbit information.

According to the configuration, since the total of the valid periods of the plural pieces of the satellite predicted position information is longer than a valid period of the satellite orbit information, once the terminal device obtains the plural pieces of the satellite predicted position information, there is no need to obtain a new piece of the satellite predicted position information from the information provision device over a longer period than the valid period of the satellite orbit information by selecting and using the satellite predicted position information within the valid period.

Thereby, the information provision device can provide the plural pieces of the satellite predicted position information by which there is no need to obtain a new piece of the satellite predicted position information from the information provision device over a longer period than the valid period of the satellite orbit information.

According to an eleventh aspect of the invention, a terminal device that performs positioning based on position-related signals from SPS includes: a satellite predicted position information obtaining section for obtaining satellite predicted position information generated based on satellite orbit information of the SPS and physical quantity information affecting acceleration affecting acceleration of the SPS from an information provision device for providing the satellite predicted position information indicating predicted positions of the SPS; a positioning section for performing positioning based on the position-related signals using the satellite predicted position information; a valid period lapse determining section for determining whether a valid period of the satellite predicted position information has elapsed or not; and a new satellite predicted position information obtaining section for obtaining a new piece of the satellite predicted position information based on a determination result of the valid period lapse determining section.

According to a twelfth aspect of the invention, a control program for information provision device allows a computer to execute: a satellite orbit information obtaining step at which an information provision device that provides satellite predicted position information indicating predicted positions of SPS to a terminal device for performing positioning based on position-related signals from the SPS obtains satellite orbit information indicating satellite orbits of the SPS; a satellite initial velocity information generating step at which the information provision device generates satellite initial velocity information indicating velocities of the SPS at a reference time as reference of the satellite predicted position information based on the satellite orbit information; a satellite initial position information generating step at which the information provision device generates satellite initial position information indicating positions of the SPS at the reference time based on the satellite orbit information; a satellite acceleration information generating step at which the information provision device generates satellite acceleration information indicating acceleration of the SPS based on the satellite initial velocity information, the satellite initial position information, and the physical quantity information affecting acceleration indicating physical quantities affecting the acceleration of the SPS; and a satellite predicted position information generating step at which the information provision device generates the satellite predicted position information based on the satellite initial velocity information, the satellite initial position information, and the satellite acceleration information.

According to a thirteenth aspect of the invention, a control program for terminal device allows a computer to execute: a satellite predicted position information obtaining step at which a terminal device that performs positioning based on position-related signals from SPS obtains satellite predicted position information generated based on satellite orbit information of the SPS and physical quantity information affecting acceleration affecting acceleration of the SPS from an information provision device for providing the satellite predicted position information indicating predicted positions of the SPS; a positioning step at which the terminal device performs positioning based on the position-related signals using the satellite predicted position information; a valid period lapse determining step at which the terminal device determines whether the valid period of the satellite predicted position information has elapsed or not; and a new satellite predicted position information obtaining step at which the terminal device obtains a new piece of the satellite predicted position information based on a determination result of the valid period lapse determining step.

### BRIEF DESCRIPTION OF THE DRAWINGS

The invention will be described with reference to the accompanying drawings, wherein like numbers reference like elements and wherein:
Fig. 1 is a schematic diagram showing a positioning system according to the embodiment of the invention;
Fig. 2 is a schematic diagram showing a main hardware configuration of the server;
Fig. 3 is a schematic diagram showing a main hardware configuration of the terminal;
Fig. 4 is a schematic diagram showing a main software configuration of the server;
Figs. 5A and 5B show an example of earth's gravitational acceleration time function information etc;
Figs. 6A and 6B show an example of predicted position vector equation information etc.;
Fig. 7 shows an example of LTE model information generation program;
Figs. 8A and 8B show an example of individual LTE model information etc.;
Fig. 9 shows an example of satellite position errors etc.;
Fig. 10 is a schematic diagram showing a main software configuration of the terminal;
Fig. 11 is a schematic flowchart showing an operation example of the positioning system;
Fig. 12 is a schematic flowchart showing an operation example of the positioning system; and
Fig. 13 is a schematic flowchart showing an operation example of the positioning system.

### DESCRIPTION OF THE EMBODIMENTS

Hereinafter, a preferred embodiment of the invention will be described in details by referring to accompanying drawings etc.

Since the embodiment as described below is a preferred specific example of the invention, technically preferred various limitations are imposed thereon, however, the scope of the invention is not limited to these modes without particular description that limits the invention in the explanation below.

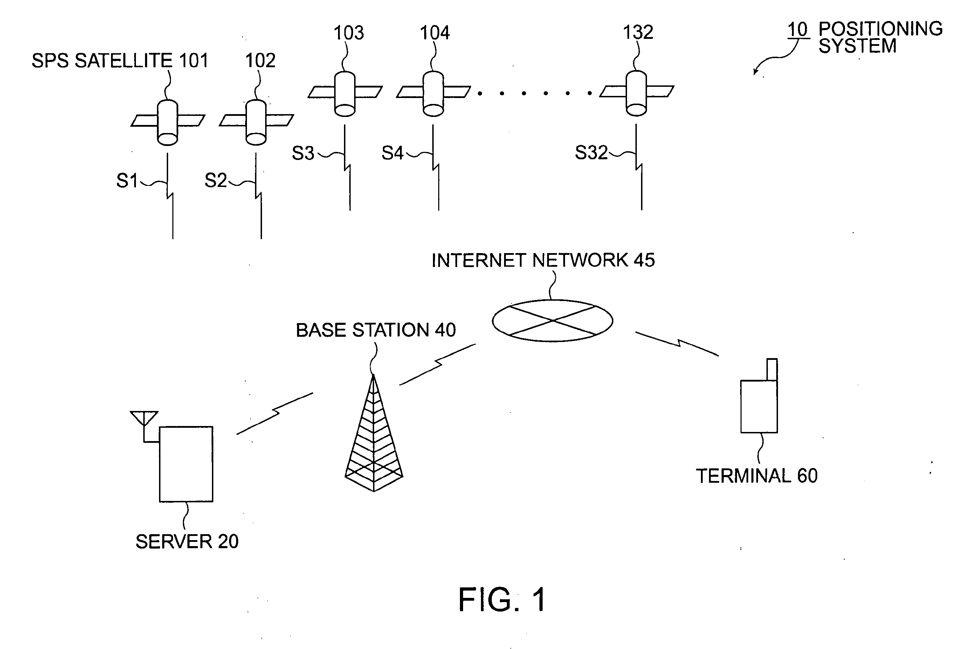

Fig. 1 is a schematic diagram showing a positioning system 10 according to the embodiment of the invention.

As shown in Fig. 1, the positioning system 10 has a terminal 60, for example, as a terminal device for performing positioning based on signals S1 to S32, for example, as position-related signals from SPSSPS satellites 101 to 132, for example, as SPS.

As shown in Fig. 1, the positioning system 10 also has a server 20, for example, as an information provision device for providing to the terminal 60 LTE (Long Time Ephemeris) model information 276, which will be described later, as an example of satellite predicted position information indicating predicted positions of the SPSSPS satellites 101 etc.

The terminal 60 and the server 20 can communicate via a base station 40, for example, as a communication base station and an internet network 45, for example, as a communication network.

By the way, the terminal 60 is, for example, a cellular phone, PHS (Personal Handy-phone System), PDA (Personal Digital Assistance), or the like, however, not limited to these.

Further, unlike the embodiment, the number of SPSSPS satellites 101 etc. is not limited to 32.

Furthermore, unlike the embodiment, the respective numbers of terminal 60, base station 40, and server 20 may be plural.

### (Regarding main hardware configuration of server 20)

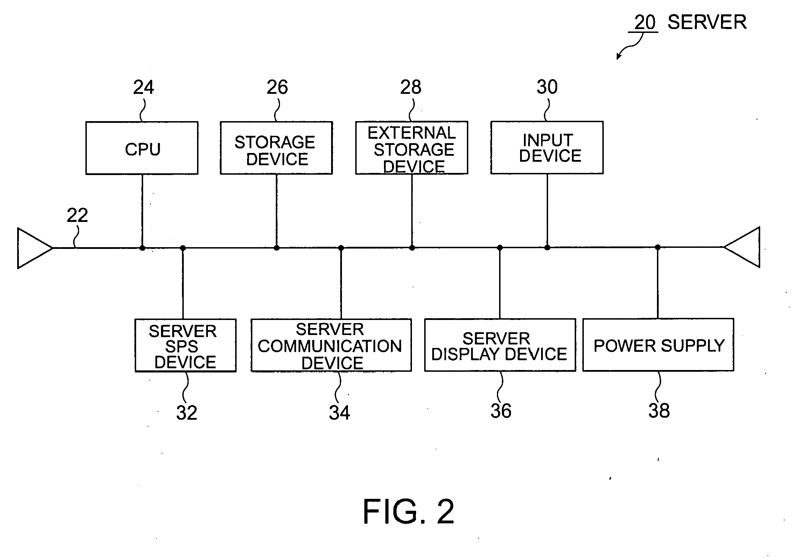

Fig. 2 is a schematic diagram showing a main hardware configuration of the server 20.

As shown in Fig. 2, the server 20 has a computer and the computer has a bus 22.

A CPU (Central Processing Unit) 24, a storage device 26, an external storage device 28, etc. are connected to the bus 22. The storage device 26 is, for example, a RAM (Random Access Memory), ROM (Read Only Memory), or the like. The external storage device 28 is an HD (Hard Disk) or the like.

Further, an input device 30 for inputting various kinds of information, a server SPSSPS device 32 for receiving signals S1 etc. from the SPSSPS satellites 101 etc. (see Fig. 1), a server communication device 34 for communication with the terminal 60 (see Fig. 1) etc., a server display device 36 for displaying various kinds of information, and a power supply 38 are connected to the bus 22.

### (Regarding main hardware configuration of terminal 60)

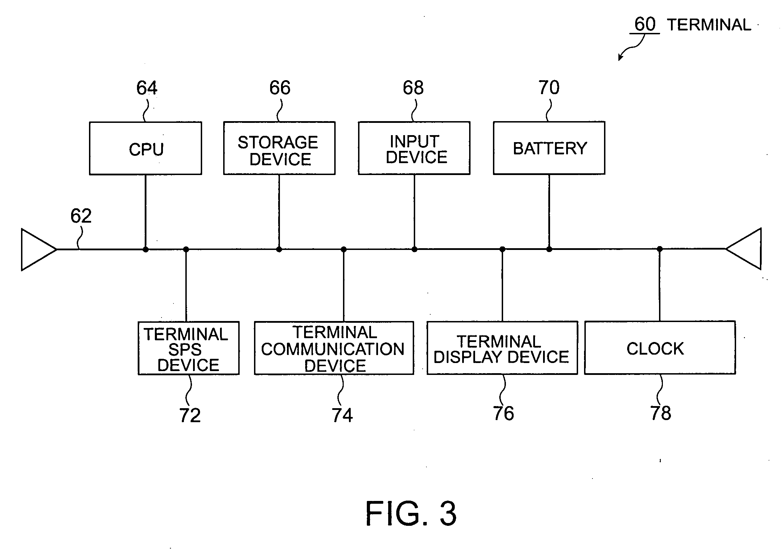

Fig. 3 is a schematic diagram showing a main hardware configuration of the terminal 60.

As shown in Fig. 3, the terminal 60 has a computer and the computer has a bus 62.

A CPU 64, a storage device 66, etc. are connected to the bus 62.

Further, an input device 68 for inputting various kinds of information, a battery 70, a terminal SPSSPS device 72 for receiving signals S1 etc. from the SPSSPS satellites 101 etc. (see Fig. 1), a terminal communication device 74 for communication with the server 20 etc., a terminal display device 76 for displaying various kinds of information, and a clock 78 are connected to the bus 62.

### (Regarding main software configuration of server 20)

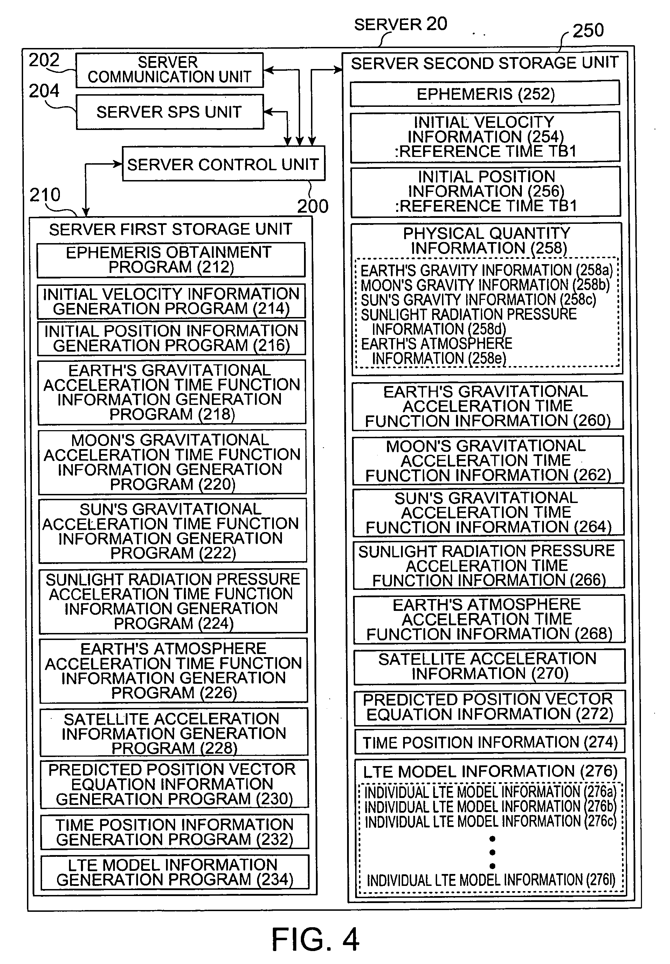

Fig. 4 is a schematic diagram showing a main software configuration of the server 20.

As shown in Fig. 4, the server 20 has a server control unit 200 for controlling respective units, a server communication unit 202 corresponding to the server communication device 34 (see Fig. 2), a server SPSSPS unit 204 corresponding to the server SPSSPS device 32 (see Fig. 2), etc.

The server 20 also has a server first storage unit 210 for storing various kinds of programs and a server second storage unit 250 for storing various kinds of information.

As shown in Fig. 4, the server 20 has stored an Ephemeris obtainment program 212 in the server first storage unit 210. The Ephemeris obtainment program 212 is information for the server control unit 200 to obtain satellite orbit information indicating satellite orbits of the SPSSPS satellites 101 etc. (hereinafter, referred to Ephemeris) from the signals S1 etc. received by the server SPSSPS unit 204. That is, Ephemeris is an example of satellite orbit information. Further, the Ephemeris obtainment program 212 and the server control unit 200 are examples of satellite orbit information obtaining section.

Specifically, the server control unit 200 analyzes the signals S1 etc. with the Ephemeris obtainment program 212, obtains Ephemeris 252, and stores it in the server second storage unit 250.

As shown in Fig. 4, the server 20 has stored an initial velocity information generation program 214 in the server first storage unit 210. The initial velocity information generation program 214 is information for the server control unit 200 to generate initial velocity information 254 indicating velocity vectors of the SPSSPS satellites 101 etc. at reference time TB1, for example, as a reference time used as reference of individual LTE model information 276a etc., which will be described later, based on the Ephemeris 252. The initial velocity information 254 is an example of satellite initial velocity information. Further, the initial velocity information generation program 214 and the server control unit 200 are examples of satellite initial velocity information generating section.

Since positions of the SPSSPS satellites 101 etc. in the satellite orbits at a specific time are indicated in the Ephemeris 252, the velocities of the SPSSPS satellites 101 etc. at the above described reference time can be calculated by calculating the positions of the SPSSPS satellites 101 etc. in the satellite orbits corresponding two specific times before and after the reference time TB1, for example.

The server control unit 200 stores the generated initial velocity information 254 in the server second storage unit 250.

As shown in Fig. 4, the server 20 has stored an initial position information generation program 216 in the server first storage unit 210. The initial position information generation program 216 is information for the server control unit 200 to generate initial position information 256 indicating position vectors of the SPSSPS satellites 101 etc. at the reference time TB1 based on the Ephemeris 252. The initial position information 256 is an example of satellite initial position information. Further, the initial position information generation program 216 and the server control unit 200 are examples of satellite initial position information generating section.

The initial position information 256 is information indicating positions of the respective SPSSPS satellites 101 etc. in three-dimensional coordinates having X-axis, Y-axis, and Z-axis.

As shown in Fig. 4, the server 20 has stored physical quantity information 258 in the server second storage unit 250. As shown in Fig. 4, the physical quantity information 258 includes earth's gravity information 258a, moon's gravity information 258b, sun's gravity information 258c, sunlight radiation pressure information 258d, and earth's atmosphere information 258e. These physical quantities of the earth gravity information 258a etc. are physical quantities affecting the acceleration of the SPSSPS satellites 101 etc. That is, the physical quantity information 258 is an example of physical quantity information affecting acceleration, and the server second storage unit 250 is an example of physical quantity information affecting acceleration storing section.

As shown in Fig. 4, the server 20 has stored an earth's gravitational acceleration time function information generation program 218, a moon's gravitational acceleration time function information generation program 220, a sun's gravitational acceleration time function information generation program 222, a sunlight radiation pressure acceleration time function information generation program 224, and an earth's atmosphere acceleration time function information generation program 226 in the server first storage unit 210. The earth's gravitational acceleration time function information generation program 218, the moon's gravitational acceleration time function information generation program 220, the sun's gravitational acceleration time function information generation program 222, the sunlight radiation pressure acceleration time function information generation program 224, and the earth's atmosphere acceleration time function information generation program 226 are information for the server control unit 200 to generate earth's gravitational acceleration time function information 260, moon's gravitational acceleration time function information 262, sun's gravitational acceleration time function information 264, sunlight radiation pressure acceleration time function information 266, and earth's atmosphere acceleration time function information 268, respectively.

Specifically, the server control unit 200 generates the earth's gravitational acceleration time function information 260 etc. based on information indicating weights of the respective SPSSPS satellites 101 etc. and the physical quantity information 258 with the earth's gravitational acceleration time function information generation program 218.

The server control unit 200 stores the generated earth's gravitational acceleration time function information 260 etc. in the server second storage unit 250.

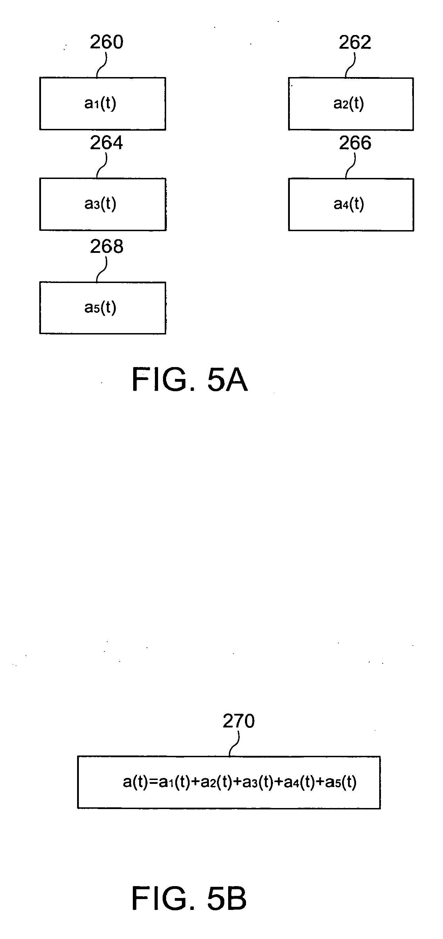

Figs. 5A and 5B show an example of the earth's gravitational acceleration time function information 260 etc.

As shown in Fig. 5A, the earth's gravitational acceleration time function information 260 etc. are function information defined by specific coefficient a₁ etc. with time as a variable. Here, time t indicates a deviation time from the reference time TB1, for example.

The earth's gravitational acceleration time function information 260 etc. are generated with respect to each of the X-axis component, Y-axis component, and Z-axis component in the three-dimensional coordinates.

As shown in Fig. 4, the server 20 has stored a satellite acceleration information generation program 228 in the server first storage unit 210. The satellite acceleration information generation program 228 is information for the server control unit 200 to generate satellite acceleration information 270 indicating the acceleration of the respective SPSSPS satellites 101 etc. based on the initial velocity information 254, the initial position information 256, and the physical quantity information 258. Here, the physical quantity information 258 has been transformed into the earth's gravitational acceleration time function information 260 etc. by processing with the above described earth's gravitational acceleration time function information generation programs 218 etc. The satellite acceleration information 270 is an example of satellite acceleration information, and the satellite acceleration information generation program 228 and the server control unit 200 are examples of satellite acceleration information generating section.

Specifically, the server control unit 200 generates the satellite acceleration information 270 indicating the acceleration of the SPSSPS satellite 101 based on the earth's gravitational acceleration time function information 260 etc. (see Fig. 5A) as shown in Fig. 5B, for example, with the satellite acceleration information generation program 228.

Among information on various physical quantities, the gravitational acceleration information of the SPSSPS satellite 101 to the earth and the gravitational acceleration information to the moon, and the gravitational acceleration information to the sun especially have great influence on the acceleration of the SPSSPS satellites 101 etc. On this point, since the physical quantity information 258 includes the earth's gravity information 258a, the moon's gravity information 258b, and the sun's gravity information 258c as described above, it is generated using physical quantities especially having great influence on the acceleration. Therefore, the information is highly reliable. Accordingly, predicted position vector equation information 272, time position information 274, individual LTE model information 276a etc. and LTE model information 276 generated based on the highly reliable satellite acceleration information 270, which will be described later, are also highly reliable.

Further, the above described earth's gravity information 258a etc. are semipermanently fixed physical quantities.

Accordingly, once the Ephemeris 252 is obtained and the initial velocity information 254 and the initial position information 256 are generated, the satellite acceleration information 270 that is valid for a longer period than the Ephemeris can be generated based on the earth's gravity information 258a etc.

Further, the LTE model information 276a etc. and LTE model information 276, which will be described later, generated based on the satellite acceleration information 270 that is valid for a longer period than the Ephemeris also become information that is valid in a longer period than the Ephemeris.

Thereby, the server 20 can provide the LTE model information 276 that is valid for a longer period than the Ephemeris.

Although omitted in Fig. 5B, the satellite acceleration information 270 is generated with respect to each of the X-axis component, Y-axis component, and Z-axis component in the three-dimensional coordinates with respect to each of the SPSSPS satellites 101 etc.

As shown in Fig. 4, the server 20 has stored a predicted position vector equation information generation program 230 in the server first storage unit 210. The predicted position vector equation information generation program 230 is information for the server control unit 200 to generate predicted position vector equation information 272 for calculating the positions of the respective SPSSPS satellites 101 etc. in the satellite orbits.

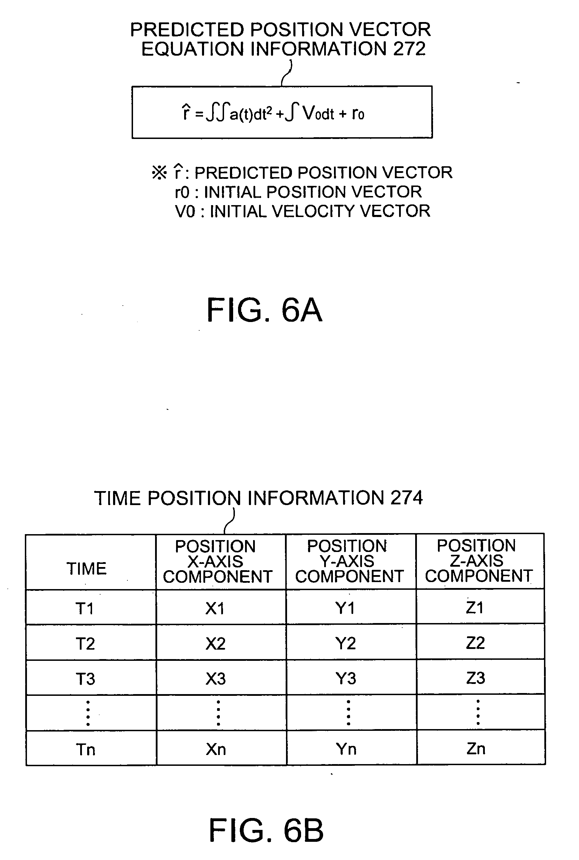

Figs. 6A and 6B show an example of the predicted position vector equation information 272 etc.

As shown Fig. 6A, the predicted position vector equation information 272 is generated based on initial velocity vector v₀ of the SPSSPS satellite 101 indicated in the initial velocity information 254, initial position vector r₀ indicated in the initial position information 256, and satellite acceleration a(t) (see Fig. 5B) indicated in the satellite acceleration information 270, for example. The predicted position vector equation information 272 is generated with respect to each SPSSPS satellite 101.

Further, although omitted in Fig. 6A, the predicted position vector equation information 272 is generated with respect to each coordinate axis component in the three-dimensional coordinates.

The server control unit 200 stores the generated predicted position vector equation information 272 in the server second storage unit 250.

Using the predicted position vector equation information 272, the positions of the respective SPSSPS satellites 101 etc. at a specific time can be calculated, and the server 20 further has the configuration as below for reducing processing load on the terminal 60 at the positioning time.

That is, as shown in Fig. 4, the server 20 has stored a time position information generation program 232 in the server first storage unit 210. The time position information generation program 232 is information to generate time position information 274 indicating the positions of the respective SPS satellites 101 etc. at a specific time.

Specifically, the server control unit 200 generates the time position information 274 shown in Fig. 6B by substituting times T1 and T2 to Tn before and after the reference time TB1, for example, in a predicted position vector equation (see Fig. 6A) indicated in the predicted position vector equation information 272 with the time position information generation program 232 and calculating the positions of the respective SPS satellites 101 etc. with respect to each coordinate such as X-axis component in the three-dimensional coordinates.

The server control unit 200 stores the generated time position information 274 in the second storage unit 250.

As shown in Fig. 4, the server 20 has stored an LTE model information generation program 234 in the server first storage unit 210. The LTE model information generation program 234 is information for the server control unit 200 to generate the individual LTE model information 276a etc. indicating an eighth order equation, for example, as a multiple order polynomial.

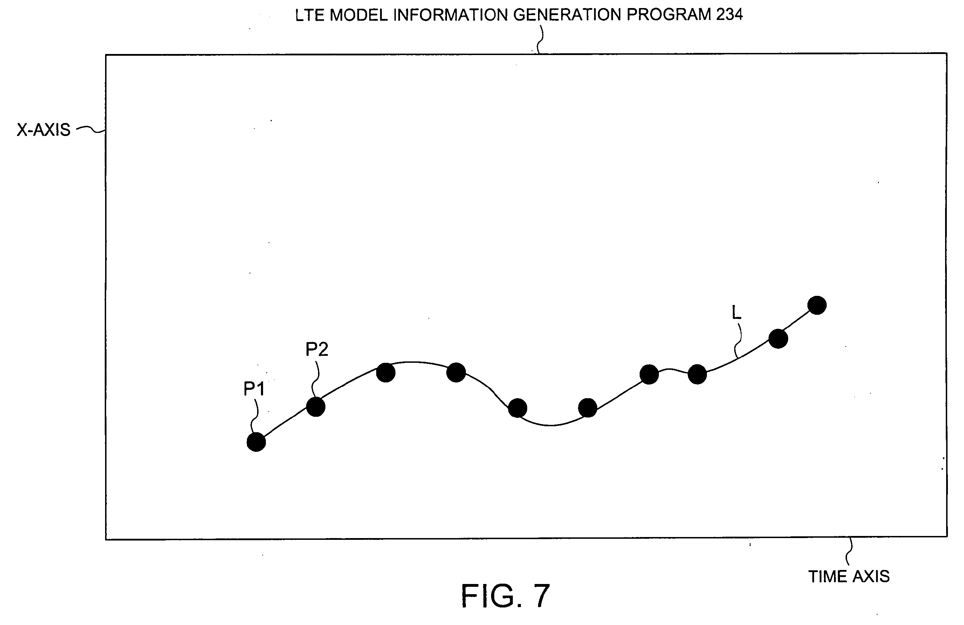

Fig. 7 shows an example of the LTE model information generation program 234.

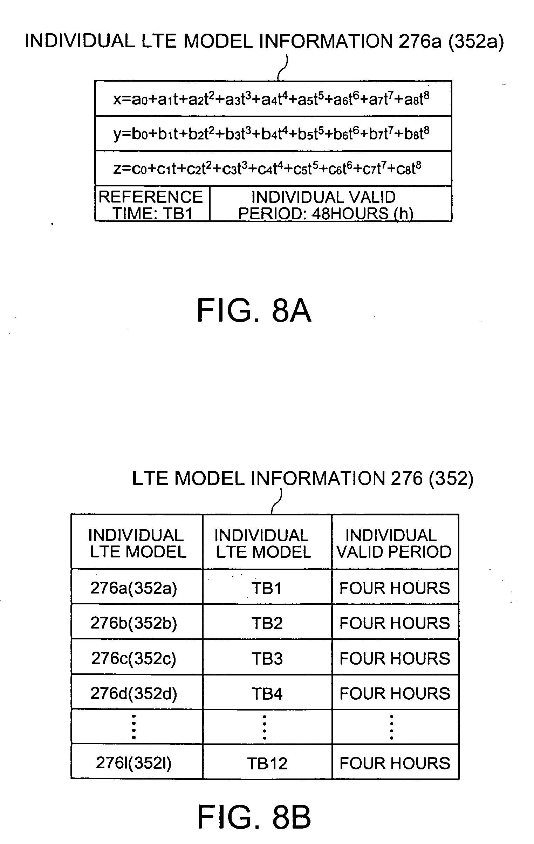

Figs. 8A and 8B show an example of the individual LTE model information 276a etc.

As shown in Fig. 7, the server control unit 200, for example, locates the position P1 etc. of the SPS satellite 101 in x-coordinate in the three-dimensional coordinates indicated in the time position information 274 by the times and positions indicated in the time position information 274 with the LTE model information generation program 234 and performs approximation processing by the least-squares method to calculate a multiple order polynomial indicating curve L. Here, the least-squares method is an algorithm for obtaining an approximation expression from a large number of known points having a certain tendency.

Although omitted in Fig. 7, a multiple order polynomial is calculated with respect to each of y-coordinate and z-coordinate to generate the individual LTE model information 276a shown in Fig. 8A. The individual LTE model information 276a is an example of satellite predicted position information.

As shown in Fig. 8A, the individual LTE model information 276a indicates a multiple order polynomial with time as a valuable.

The multiple order polynomial is an eighth order polynomial, for example. It has been experimentally clear that, in the case of a first to sixth order polynomial, the predicted positions of the respective SPS satellites 101 etc. calculated by the multiple order polynomial have a large margin of error.

Contrary, in the case of a tenth or higher order polynomial, the calculation amount is large and the processing load on the server 20 becomes excessive. Further, it has been experimentally clear that the margin of error of the predicted position of the SPS satellites 101 etc. becomes larger by the accumulation of errors in calculation processing.

Accordingly, the multiple order polynomial indicated by the individual LTE model information 276a is desirably one of a seventh order polynomial, an eighth order polynomial, or a ninth order polynomial. For example, with the individual LTE model information 276a indicating an eighth order polynomial, the predicted positions of the SPS satellites 101 etc. can be calculated precisely without making the processing load on the server 20 excessive.

As shown in Fig. 8A, the individual LTE model information 276a is information with reference to the reference time TB1, and includes individual valid period information indicating individual valid periods in which the precision of the predicted positions of the SPS satellites 101 etc. can be maintained within an error allowable range.

Regarding the individual valid period, it has been experimentally clear that the precision can be maintained within the above described error allowable range if it is eight hours (h) or less, however, in the embodiment, for ensuring the certainty, the individual valid period is set to four hours (h).

The above described individual LTE model information 276a is generated with respect to each of the SPS satellites 101 etc.

The server control unit 200 stores the generated individual LTE model information 276a in the server second storage unit 250.

As described above, the server control unit 200 generates the predicted position vector equation information 272 based on the initial velocity information 254, the initial position information 256, and the satellite acceleration information 270. Further, it is arranged so as to generate the time position information 274 based on the predicted position vector equation information 272, and further generate the individual LTE model information 276a. That is, the server control unit 200, the predicted position vector equation information generation program 230, the time position information generation program 232, and the LTE model information generation program 234 are examples of satellite predicted position information generating section.

The server control unit 200 generates not only the individual LTE model information 276a with reference to the reference time TB1 but also plural pieces of individual LTE model information 276b etc. with reference to reference time TB2 etc. as reference times different from the reference time TB1, for example, as shown in Fig. 8B based on the predicted position vector equation information generation program 230, the time position information generation program 232, and the LTE model information generation program 234.

Each individual valid period of the individual LTE model information 276a etc. generated with the different reference times TB1 etc. as reference times is four hours (h), for example. Twelve individual LTE model information 276a to 2761 have total 48 hours (h) of valid periods.

The individual LTE model information 276 is information of a set of these twelve individual LTE model information 276a. Also the individual LTE model information 276 as a set of individual LTE model information 276a is an example of satellite predicted position information.

The server 20 generates the individual LTE model information 276 regularly at one-hour (h) intervals, for example, and stores them in the server second storage unit 250.

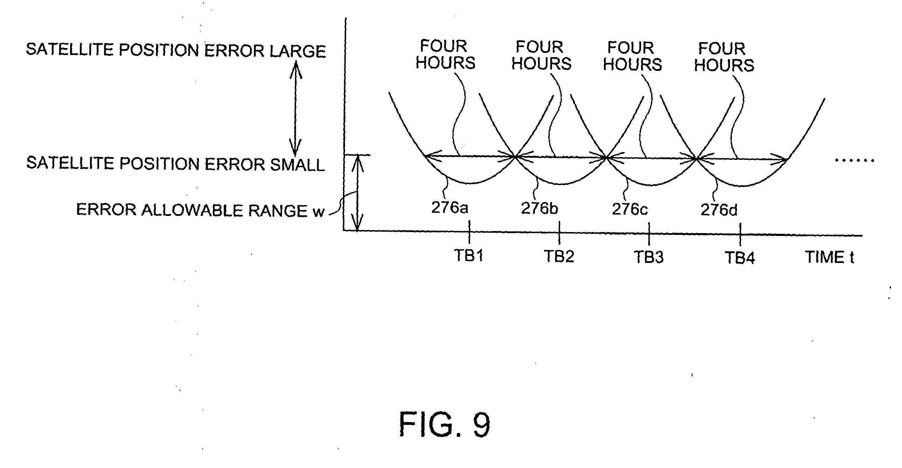

Fig. 9 shows an example of satellite position errors etc. calculated by the individual LTE model information 276a etc. The satellite position errors are errors between the predicted positions of the SPS satellites 101 etc. calculated with the individual LTE model information 276a etc. and real positions.

As described above, the individual LTE model information 276a etc. are information valid for a longer period than the Ephemeris is, however, the precision of the individual LTE model information 276a etc. generated with reference to one reference time TB1 etc. becomes lower as the times deviate from the reference time TB1 etc. as shown in Fig. 9.

Specifically, as shown in Fig. 9, the time when the errors of the satellite positions of the respective SPS satellites 101 etc. calculated with the respective individual LTE model information 276a fall within the error allowable range w is four hours (h), for example, as the above described individual valid periods. The individual valid periods are calculated with the reference time TB1 etc. as a center. That is, the fact that the individual valid period is four hours (h) means that the individual valid period is two hours before and after the time TB1 with the time as a center, for example.

Further, the individual LTE model information 276 is formed so that the respective individual valid periods are continuous as shown in Fig. 9.

Accordingly, the terminal 60 etc. using the LTE model information 276 can constantly calculate the positions of the SPS satellites 101 etc. precisely using some of the individual LTE model information 276a etc. with high precision within the valid period of the LTE model information 276.

Note that the LTE model information 276 is generated with respect to each of the SPS satellites 101 etc.

By the way, the LTE model information 276a etc. that form the individual LTE model information 276 may be formed so as to include time correction terms. Because of inclusion of the time correction terms, the terminal 60 utilizing the LTE model information 276 can obtain information indicating the predicted positions of the respective SPS satellites 101 etc. with high precision even if the input time deviates from the reference time TB1 etc.

Thereby, the server 20 can provide the LTE model information 276 that enables the obtainment of information indicating predicted positions of the respective SPS satellites 101 etc. with high precision even if the input time deviates from the reference time TB1 etc.

Further, the LTE model information 276 may be made into information having a valid period equal to or more than 48 hours by increasing the number of the individual LTE model information 276a etc.

Thereby, once the terminal 60 obtains the LTE model information 276, there is no need to obtain new LTE model information 276 from the server 20 for 48 hours or more by selecting and using the individual LTE model information 276a etc. within the individual valid periods.

As described above, the server control unit 200 generates plural pieces of individual LTE model information 276a etc. (see Fig. 8B) having different reference times based on the predicted position vector equation information generation program 230, the time position information generation program 232, and the LTE model information generation program 234.

Of these, with respect to the individual LTE model information 276a with the initial reference time TB1 as the reference time, the initial velocity information 254 and the initial position information 256 are generated based on the Ephemeris 252, and further, the satellite acceleration information 270, the predicted position vector equation information 272, and the time position information 274 are generated, and then, the individual LTE model information 276a is generated.

Contrary, with respect to the individual LTE model information 276b with the next reference time TB2 to the reference time TB1 as the reference time, the initial velocity information 254 etc. are generated based on the individual LTE model information 276a at the reference time TB1 immediately before, and the individual LTE model information 276b is generated.

With respect to individual LTE model information 276c to 2761 with the subsequent reference times TB3 to TB12 as the reference times, similarly, the information is generated based on the individual LTE model with the reference time immediately before as the reference time.

Accordingly, when the server 20 generates one piece of individual LTE model information 276a based on the Ephemeris 262, it can sequentially generate the individual LTE model information 276b etc. based on the individual LTE model information 276a generated by the server 20 itself.

The above described individual LTE model information 276a with reference to the reference time TB1 is an example of first satellite predicted position information. Further, the reference time TB2 immediately after the reference time TB1 is an example of second reference time. The individual LTE model information 276b with reference to the reference time TB2 is an example of second satellite predicted position information. The initial velocity information 254 corresponding to the reference time TB2 is an example of second initial velocity information. Further, the server control unit 200 and the initial velocity information generation program 214 are also examples of second satellite initial velocity information generating section.

Moreover, the initial position information 256 corresponding to the reference time TB2 is an example of second initial position information. Further, the server control unit 200 and the initial position information generation program 216 are also examples of second satellite initial position information generating section.

Further, the satellite acceleration information 270 corresponding to the reference time TB2 is an example of second acceleration information, and the server control unit 200 and the satellite acceleration information generation program 228 are also examples of second satellite acceleration information generating section.

Furthermore, the server control unit 200, the predicted position vector equation information generation program 230, the time position information generation program 232, and the LTE model information generation program 234 are also examples of second satellite predicted position information generating section.

As described above, since the individual LTE model information 276a etc. that form the LTE model information 276 indicate multiple order polynomials with time as a variable, the terminal 60 utilizing the LTE model information 276 can obtain information indicating the predicted positions of the respective SPS satellites 101 etc. only by inputting the times to the multiple order polynomials.

Thereby, the server 20 can provide the LTE model information 276 that enables the obtainment of information indicating predicted positions of the SPS satellites 101 etc. only by inputting the times to the terminal 60.

### (Regarding main software configuration of terminal 60)

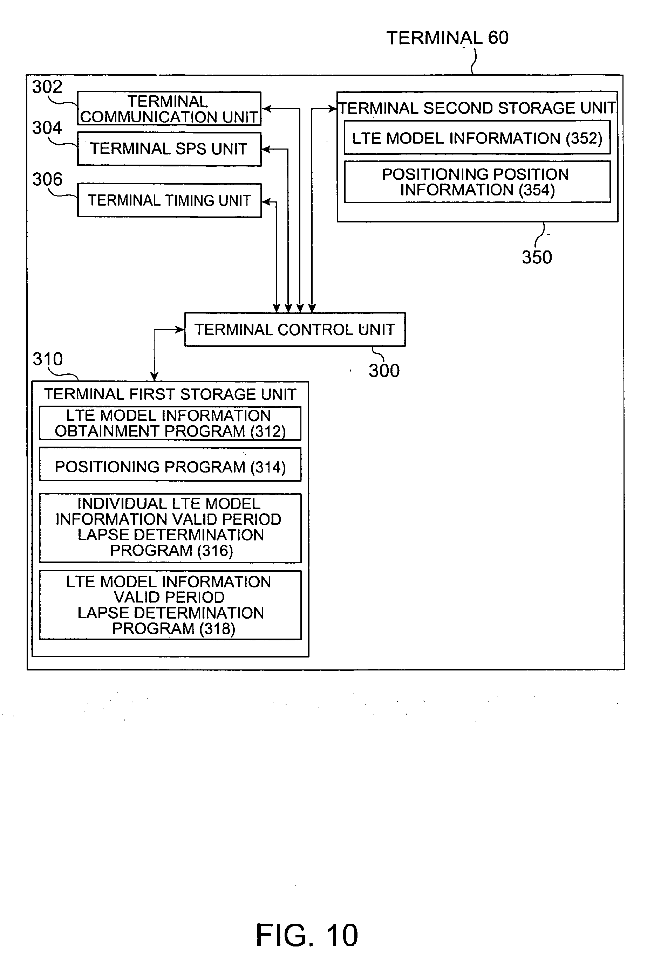

Fig. 10 is a schematic diagram showing a main software configuration of the terminal 60.

As shown in Fig. 10, the terminal 60 has a terminal control unit 300 for controlling the respective units, a terminal communication unit 302 corresponding to the server communication device 74 (see Fig. 3), a terminal SPS unit 304 corresponding to the terminal SPS device 72 (see Fig. 3), a terminal timing unit 306 corresponding to the clock 78 (see Fig. 3), etc.

The terminal 60 also has a terminal first storage unit 310 for storing various kinds of programs and a terminal second storage unit 350 for storing various kinds of information.

As shown in Fig. 10, the terminal 60 has stored an LTE model information obtainment program 312 in the terminal first storage unit 310. The LTE model obtainment program 312 is information for the terminal control unit 300 to obtain the LTE model information 276 (see Fig. 4) from the server 20 by the terminal communication unit 302. That is, the LTE model information obtainment program 312, the terminal control unit 300, and the terminal communication unit 302 are examples of satellite predicted position information obtaining section.

The terminal control unit 300 stores the obtained LTE model information 276 as LTE model information 352 in the terminal second storage unit 350.

As shown in Fig. 10, the terminal 60 has stored a positioning program 314 in the terminal first storage unit 310. The positioning program 314 is information for the terminal control unit 300 to perform positioning using the LTE model information 352 based on the signals S1 etc. (see Fig. 1) from the SPS satellites 101 etc. received by the terminal SPS unit 304. That is, the positioning program 314 and the terminal control unit 300 are examples of positioning section.

The terminal control unit 300 stores positioning position information 354 generated by positioning in the terminal second storage unit 350.

As shown in Fig. 10, the terminal 60 has stored an individual LTE model information valid period lapse determination program 316 in the terminal first storage unit 310. The individual LTE model information valid period lapse determination program 316 is information for the terminal control unit 300 to determine whether individual valid periods of individual LTE model information 352a etc. (see Fig. 8B) have elapsed or not.

Thereby, the terminal 60 can select and use the individual LTE model information 352a etc. within the individual LTE model information valid periods at the present moment of the individual LTE models 352a to 3521 (see Fig. 8B) that form the LTE model information 352.

As shown in Fig. 10, the terminal 60 has stored an LTE model information valid period lapse determination program 318 in the terminal first storage unit 310. The LTE model information valid period lapse determination program 318 is information for the terminal control unit 300 to determine whether the valid period of the LTE model information 352 has elapsed or not. That is, the LTE model information valid period lapse determination program 318 and the terminal control unit 300 are examples of valid period lapse determining section.

Specifically, the terminal control unit 300 determines whether the valid period of the LTE model information 352 has elapsed or not with the LTE model information valid period lapse determination program 318. Here, the valid period is 48 hours (h), if the LTE model information 352 includes a set of twelve individual LTE model information 352a etc. having individual valid periods of four hours (h), for example, as shown in Fig. 8B.

For example, the terminal control unit 300 has timed the time when it obtains the LTE model information 352 by the terminal timing unit 306, and determines whether the valid period of the LTE model information 352 has elapsed or not based on whether 48 hours (h) has elapsed or not.

Then, if the terminal control unit 300 determines that the valid period of the LTE model information 352 has elapsed, it obtains new LTE model information 276 from the server 20 with the above described LTE model obtainment program 312. That is, the LTE model information obtainment program 312 and the terminal control unit 300 are also examples of new satellite predicted position information obtaining section.

As described above, there is no need for the terminal 60 to obtain new LTE model information 276 from the server 20 until the valid period has elapsed once it obtains the LTE model information 276 (352). Further, as described above, since the LTE model information 276 (352) is information that is valid for a long period equal to or more than 48 hours (h), the terminal 60 can use the LTE model information 276 (352) over a long period. Further, the number of communication necessary for the terminal 60 to obtain the LTE model information 276 from the server 20 can be reduced.

Further, since the calculation formula for calculating the positions of the respective SPS satellites 101 etc. using the LTE model information 352 is very simple, compared to the method of calculating the positions of the respective SPS satellites 101 etc. directly from the Ephemeris, the shorter calculation time is required, less memory consumption is required, and the calculation can be performed by a low-speed CPU, and thereby, the terminal 60 can be manufactured at a low price.

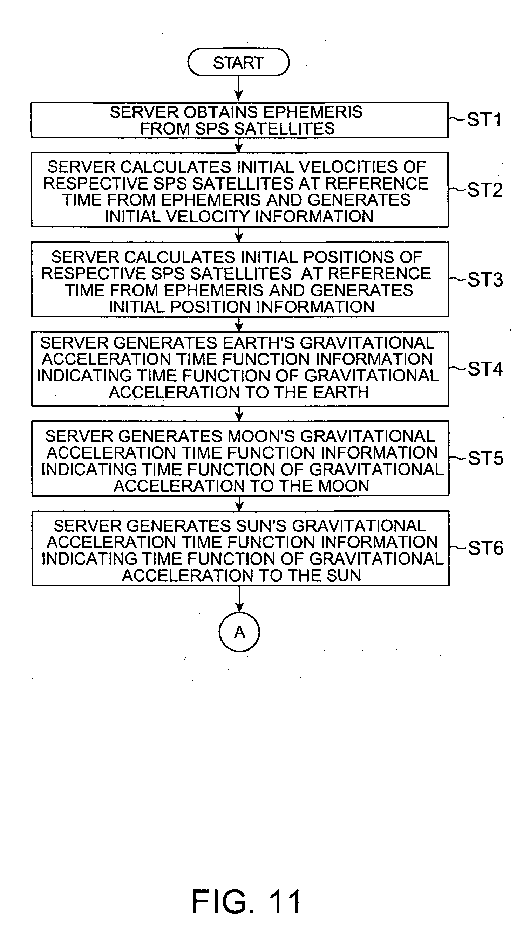

Heretofore, the positioning system 10 of the embodiment has been described. As below, an operation example of the positioning system 10 will be described principally using Figs. 11, 12, and 13.

Figs. 11, 12, and 13 are schematic flow charts showing the operation example of the positioning system 10.

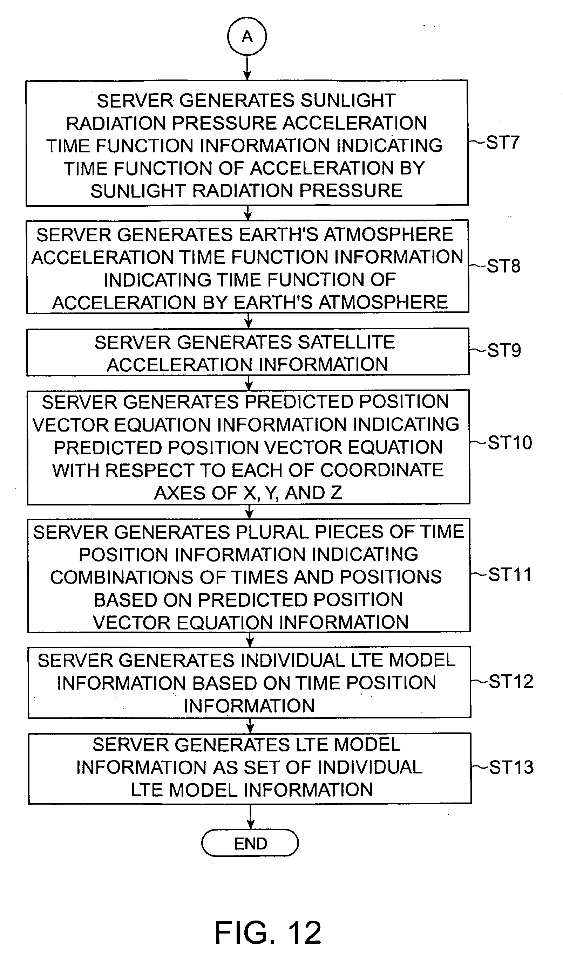

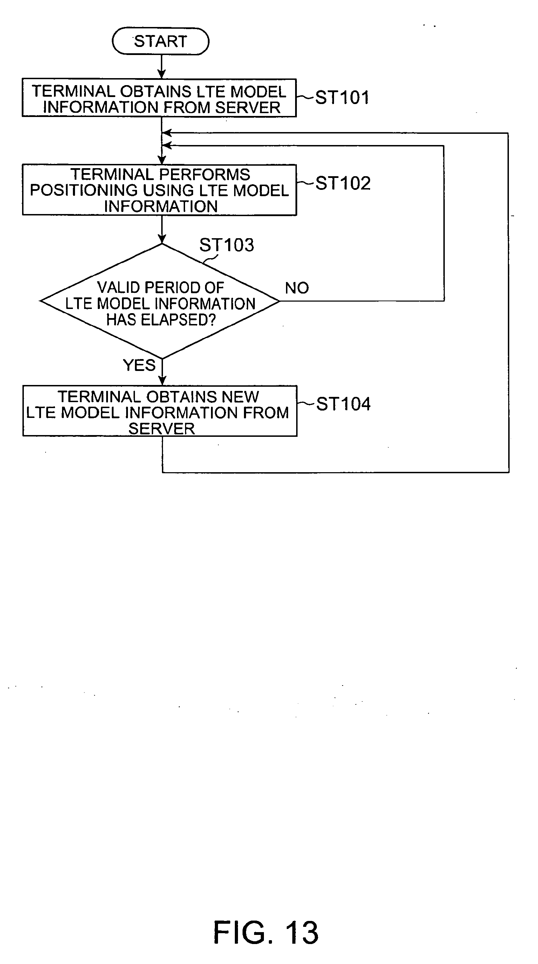

Figs. 11 and 12 show an operation example of the server 20. Fig. 13 shows an operation example of the terminal 60.

First, the server 20 obtains the Ephemeris 252 (see Fig. 4) from the SPS satellites 101 etc. (ST1 in Fig. 11). This step ST1 is an example of satellite orbit information obtaining step.

Subsequently, the server 20 calculates the initial velocities of the SPS satellites 101 etc. at the reference time TB1 etc. from the Ephemeris 252 and generates the initial velocity information 254 (see Fig. 4) (step ST2). This step ST2 is an example of satellite initial velocity information generating step.

Subsequently, the server 20 calculates initial positions of the SPS satellites 101 etc. at the reference time TB1 etc. from the Ephemeris 252 and generates the initial position information 256 (see Fig. 4) (step ST3). This step ST3 is an example of satellite initial position information generating step.

Subsequently, the server 20 generates the earth's gravitational acceleration time function information 260 (see Fig. 5A), the moon's gravitational acceleration time function information 262 (see Fig. 5A), the sun's gravitational acceleration time function information 264 (see Fig. 5A), the sunlight radiation pressure acceleration time function information 266 (see Fig. 5A), and the earth's atmosphere acceleration time function information 268 (see Fig. 5A) (step ST4, step ST5, step ST6, and step ST7 and step ST8 in Fig. 12) .

Subsequently, the server 20 generates the satellite acceleration information 270 (see Fig. 5B) based on the earth's gravitational acceleration time function information 260 etc. generated at the above described step ST4 to step ST8 (step ST9). This step ST9 is an example of satellite acceleration information generating step.

Subsequently, the server 20 generates the predicted position vector equation information 272 (see Fig. 6A) (step ST10).

Subsequently, the server 20 generates the time position information 274 (see Fig. 6B) based on the predicted position vector equation information 272 (step ST11).

Subsequently, the server 20 generates the individual LTE model information 276a (see Fig. 8A) based on the time position information 274 (step ST12).

The above described step ST10 to step ST12 are examples of satellite predicted position information generating step.

Subsequently, the server 20 generates the LTE model information 276 (see Fig. 8B) as a set of the individual LTE model information 276 (step ST13).

At the above steps, the server 20 generates the LTE model information 276 having a valid period of 48 hours (h).

On the other hand, the terminal 60 obtains the LTE model information 276 from the server 20 (step ST101 in Fig. 13). This step ST101 is an example of satellite predicted position information obtaining step. The terminal 60 stores the obtained LTE model information 276 as LTE model information 352 in the terminal second storage unit 350 (see Fig. 10).

Subsequently, the terminal 60 performs positioning based on the signals S1 etc. (see Fig. 1) from the SPS satellites 101 etc. using the LTE model information 352 (step ST102). This step ST102 is an example of positioning step.

Subsequently, the terminal 60 determines whether the valid period of the LTE model information 352 has elapsed or not (step ST103). This step ST103 is an example of valid period lapse determining step.

At the above described step ST103, if the terminal 60 determines that the valid period of the LTE model information 352 has elapsed, the terminal 60 obtains new LTE model information 276 from the server 20 (step ST104). This step ST104 is an example of new satellite predicted position information obtaining step. ,

On the other hand, at the above described step ST103, if the terminal 60 determines that the valid period of the LTE model information 352 has not elapsed, the terminal 60 performs positioning using the LTE model information 352 that has been stored in the terminal second storage unit 350 without obtaining new LTE model information 276 from the server 20.

### (Regarding program and computer readable recording medium etc.)

A control program for information provision device for allowing a computer to execute the satellite orbit information obtaining step, satellite initial velocity information generating step, satellite initial position information generating step, satellite acceleration information generating step, satellite predicted position information generating step, etc. in the above described operation example can be realized.

Further, a computer readable recording medium etc. in which such control program etc. for information provision device is stored can be realized.

Moreover, a control program for terminal device for allowing a computer to execute the satellite predicted position information obtaining step, positioning step, valid period lapse determining step, new satellite predicted position information obtaining step, etc. in the above described operation example can be realized.

Further, a computer readable recording medium etc. in which such control program etc. for terminal device is stored can be realized.

A program storage medium used for installing control programs etc. for information provision device and terminal device in a computer and enabling them to be executed by the computer can be realized not only by package media such as a flexible disk as a floppy disk (registered trademark), CD-ROM (Compact Disc Read Only Memory), CD-R (Compact Disc-Recordable), CD-RW (Compact Disc-Rewriterble), DVD (Digital Versatile Disc), for example, but also by a semiconductor memory, magnetic disk, magneto-optical disk, or the like in which programs are temporarily or permanently stored.

The invention is not limited to the above described respective embodiments. Furthermore, the above described respective embodiments may be combined with one another.

## Claims

1. A positioning system comprising:
a terminal device that performs positioning based on position-related signals from SPS; and
an information provision device that provides satellite predicted position information indicating predicted positions of the SPS to the terminal device,
wherein the information provision device has:
a satellite orbit information obtaining section for obtaining satellite orbit information indicating satellite orbits of the SPS;
a satellite initial velocity information generating section for generating satellite initial velocity information indicating velocities of the SPS at a reference time as reference of the satellite predicted position information based on the satellite orbit information;
a satellite initial position information generating section for generating satellite initial position information indicating positions of the SPS at the reference time based on the satellite orbit information;
a physical quantity information affecting acceleration storing section for storing physical quantity information affecting acceleration indicating physical quantities affecting acceleration of the SPS;
a satellite acceleration information generating section for generating satellite acceleration information indicating the acceleration of the SPS based on the satellite initial velocity information, the satellite initial position information, and the physical quantity information affecting acceleration; and
a satellite predicted position information generating section for generating the satellite predicted position information based on the satellite initial velocity information, the satellite initial position information, and the satellite acceleration information, and
the terminal device has:
a satellite predicted position information obtaining section for obtaining the satellite predicted position information from the information provision device;
a positioning section for performing positioning based on the position-related signals using the satellite predicted position information;
a valid period lapse determining section for determining whether a valid period of the satellite predicted position information has elapsed or not; and
a new satellite predicted position information obtaining section for obtaining a new piece of the satellite predicted position information based on a determination result of the valid period lapse determining section.

2. An information provision device that provides satellite predicted position information indicating predicted positions of SPS to a terminal device for performing positioning based on position-related signals from the SPS,
the device comprising:
a satellite orbit information obtaining section for obtaining satellite orbit information indicating satellite orbits of the SPS;
a satellite initial velocity information generating section for generating satellite initial velocity information indicating velocities of the SPS at a reference time as reference of the satellite predicted position information based on the satellite orbit information;
a satellite initial position information generating section for generating satellite initial position information indicating positions of the SPS at the reference time based on the satellite orbit information;
a physical quantity information affecting acceleration storing section for storing physical quantity information affecting acceleration indicating physical quantities affecting acceleration of the SPS;
a satellite acceleration information generating section for generating satellite acceleration information indicating the acceleration of the SPS based on the satellite initial velocity information, the satellite initial position information, and the physical quantity information affecting acceleration; and
a satellite predicted position information generating section for generating the satellite predicted position information based on the satellite initial velocity information, the satellite initial position information, and the satellite acceleration information.

3. The information provision device according to claim 2,
wherein the satellite predicted position information generating section is arranged so as to generate plural pieces of the satellite predicted position information different in reference time.

4. The information provision device according to claim 2, further comprising:
a second satellite initial velocity information generating section for generating second satellite initial velocity information indicating velocities of the SPS at a second reference time as the reference time immediately after the reference time of the first satellite predicted position information based on the first satellite predicted position information as the first generated satellite predicted position information;
a second satellite initial position information generating section for generating second satellite initial position information indicating positions of the SPS at the second reference time based on the first satellite predicted position information;
a second satellite acceleration information generating section for generating second satellite acceleration information indicating acceleration of the SPS based on the second satellite initial velocity information, the second satellite initial position information, and the physical quantity information affecting acceleration; and
a second satellite predicted position information generating section for generating second satellite predicted position information as the satellite predicted position information with reference to the second reference time based on the second satellite initial velocity information, the second satellite initial position information, and the second satellite acceleration information.

5. The information provision device according to claim 2,
wherein the satellite predicted position information indicates a multiple order polynomial with time as a variable.

6. The information provision device according to claim 5,
wherein the multiple order polynomial includes a time correction term.

7. The information provision device according to claim 5,
wherein the multiple order polynomial is one of a seventh order polynomial, an eighth order polynomial, and a ninth order polynomial.

8. The information provision device according to claim 2,
wherein the physical quantity information affecting acceleration includes gravitational acceleration information of the SPS to the earth, gravitational acceleration information of the SPS to the moon, and gravitational acceleration information of the SPS to the sun.

9. The information provision device according to claim 2,
wherein the satellite predicted position information includes valid period information indicating a valid period of the satellite predicted position information.

10. The information provision device according to claim 9,
wherein the total of the valid periods of the plural pieces of the satellite predicted position information is longer than a valid period of the satellite orbit information.

11. A terminal device that performs positioning based on position-related signals from SPS, the device comprising:
a satellite predicted position information obtaining section for obtaining satellite predicted position information generated based on satellite orbit information of the SPS and physical quantity information affecting acceleration affecting acceleration of the SPS from an information provision device for providing the satellite predicted position information indicating predicted positions of the SPS;
a positioning section for performing positioning based on the position-related signals using the satellite predicted position information;
a valid period lapse determining section for determining whether a valid period of the satellite predicted position information has elapsed or not; and
a new satellite predicted position information obtaining section for obtaining a new piece of the satellite predicted position information based on a determination result of the valid period lapse determining section.

12. A control program for information provision device allowing a computer to execute:
a satellite orbit information obtaining step at which an information provision device that provides satellite predicted position information indicating predicted positions of SPS to a terminal device for performing positioning based on position-related signals from the SPS obtains satellite orbit information indicating satellite orbits of the SPS;
a satellite initial velocity information generating step at which the information provision device generates satellite initial velocity information indicating velocities of the SPS at a reference time as reference of the satellite predicted position information based on the satellite orbit information;
a satellite initial position information generating step at which the information provision device generates satellite initial position information indicating positions of the SPS at the reference times based on the satellite orbit information;
a satellite acceleration information generating step at which the information provision device generates satellite acceleration information indicating acceleration of the SPS based on the satellite initial velocity information, the satellite initial position information, and the physical quantity information affecting acceleration indicating physical quantities affecting the acceleration of the SPS; and
a satellite predicted position information generating step at which the information provision device generates the satellite predicted position information based on the satellite initial velocity information, the satellite initial position information, and the satellite acceleration information.

13. A control program for terminal device allowing a computer to execute:
a satellite predicted position information obtaining step at which a terminal device that performs positioning based on position-related signals from SPS obtains satellite predicted position information generated based on satellite orbit information of the SPS and physical quantity information affecting acceleration affecting acceleration of the SPS from an information provision device for providing the satellite predicted position information indicating predicted positions of the SPS;
a positioning step at which the terminal device performs positioning based on the position-related signals using the satellite predicted position information;
a valid period lapse determining step at which the terminal device determines whether the valid period of the satellite predicted position information has elapsed or not; and
a new satellite predicted position information obtaining step at which the terminal device obtains a new piece of the satellite predicted position information based on a determination result of the valid period lapse determining step.
